# EUROPEAN PATENT APPLICATION

(11) **EP 2 944 227 A1**
(43) Date of publication of application: **18.11.2015**
(21) Application number: 14305718.0
(22) Date of filing: 16.05.2014
(51) Int. Cl.: A47D 7/04

(54) **Equipped baby bassinet**

(71) Applicant: Airbus SAS, 31700 Blagnac (FR)
(72) Inventor: Westeroth, Roman, 31700 DAUX (FR)
(74) Representative: Maillet, Alain

(57) **Abstract**

The invention concerns an equipped baby bassinet (100) intended to be fixed to a wall (10) and comprising:
- a bassinet (102), and
- an adjusting system (150) which ensures the fixation of the bassinet (102) to the wall (10), and an height adjustment of the position of the bassinet (102) along the wall (10).

## Description

The current invention concerns an equipped bassinet intended to receive a baby, to be fixed to a wall and which is equipped with means allowing a height adjustment of the bassinet.

In an aircraft, it is known to use a baby bassinet when a baby travels in said aircraft.

The bassinet comprises a rigid structure on which is fixed a fabric cover. The rigid structure is fixed to a wall of the aircraft, typically the wall just in front of the baby's parents.

In order to be stored, the rigid structure is foldable and typically, it comprises a frame forming the upper horizontal part of the bassinet and two arches extending vertically under the frame and fixed to the same through pivot link. The arches can be folded around the pivot axis against the frame.

The wall presents two attachments elements to which complementary means fixed to the frame can be attached to fix the bassinet to the wall.

The position in height of the bassinet is sometimes inappropriate to the environment.

Indeed, if the bassinet is fixed too low on the wall, it can be too close of a seat and the deployment of a monitor which is located in the armrest can be hindered by the bassinet. The monitor comes into abutment against the bassinet and can not be set correctly into position.

The positioning of the bassinet can be also limited in height, because the wall bears already some other elements like a large screen. In addition, a too high position prevents the parents to look after the baby in the bassinet.

An aim of the invention is therefore to propose an equipped baby bassinet which can be fixed to a wall and which has not the drawbacks of the prior art.

To that end, the present invention concerns an equipped baby bassinet intended to be fixed to a wall and comprising:
- a bassinet, and
- an adjusting system which ensures the fixation of the bassinet to the wall, and an height adjustment of the position of the bassinet along the wall.

Therefore such equipped bassinet can be fixed to a wall and the means allow a height adjustment of the bassinet.

Preferably, the adjusting system allows the vertical translation movement of the bassinet relative to the wall, and the locking of the position of the bassinet in at least two distinct positions.

According to a first embodiment, the adjusting system comprises:
- two parallel rails, each rail being intended to be detachably fixed vertically to the wall,
- for each rail, a slider mobile in translation along said rail, the bassinet being fixed to each slider, and
- for at least one slider, a locking device intended to lock said slider in at least two positions on the rail.

Advantageously, the bassinet comprises a horizontal frame and two arches extending vertically under the frame and fixed to the same through pivot link, and each slider is fixed to an arch.

Advantageously, the fixation of a slider to an arch is realized at the upper extremity of said arch.

Advantageously, an abutment element is set between the lower extremity of each arch and the rail or the wall.

Advantageously, the abutment element is fixed to the lower extremity of the arch.

According to a second embodiment, the adjusting system comprises:
- two parallel rails extending vertically, the bassinet being fixed to each rail,
- for each rail, a slider mobile in translation along said rail, each slider being intended to be detachably fixed to the wall, and
- for at least one slider, a locking device intended to lock said slider in at least two positions on the rail.

Advantageously, the bassinet comprises a horizontal frame and two arches extending vertically under the frame and fixed to the same through pivot link, and each rail is fixed to an arch.

The characteristics of the invention will emerge more clearly from a reading of the following description of an example embodiment, the said description being produced with reference to the accompanying drawings, among which :
Fig. 1 represents a front view of an equipped bassinet according to the invention which is viewed in cross section according to the line I-I of Fig. 2, and
Fig. 2 shows a cross section according to the line II-II of Fig. 1.

In the following description, the terms relative to a position have to be taken into account with a bassinet in a position of use, it means as it is represented on the figures.

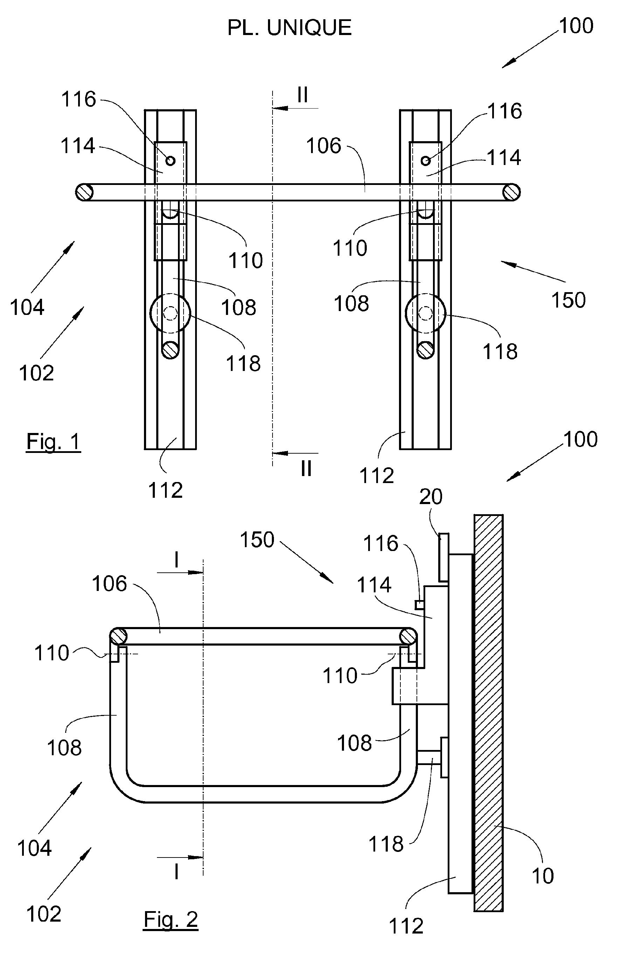

Fig. 1 shows an equipped baby bassinet 100 according to the invention and Fig. 2 shows the equipped bassinet 100 fixed to a wall 10 like a wall of an aircraft.

The equipped bassinet 100 comprises:
- a bassinet 102, and
- an adjusting system 150 which ensures the fixation of the bassinet 102 to the wall 10, and an height adjustment of the position of the bassinet 102 along the wall 10.

The height adjustment makes it possible to set the bassinet 102 at different heights along the wall 10 and to ensure the position holding of the bassinet 102 at each of these different heights.

The adjusting system 150 comprises:
- two parallel rails 112, each rail 112 being intended to be detachably fixed vertically to the wall 10,
- for each rail 112, a slider 114 mobile in translation along said rail 112, the bassinet 102 being fixed to each slider 114, and
- for at least one slider 114, and preferably each, a locking device 116 intended to lock said slider 114 in at least two positions on the rail 112.

The positions that each slider 114 can have along the rail 112, can be discrete or continuous.

To detachably fix the rails 112 to the wall 10, any appropriate system 20 can be used to fix the upper extremity of each rail 112 to the wall 10, but preferably, the same system than the prior art will be used to avoid any modification of the wall 10.

Different kinds of locking device 116 can be implemented in the equipped bassinet 100.

For example, it can be a push-button with a spring, the push-button being pushed by an adult to free the slider 114 and the spring pushing back the push-button to lock the slider 114 when the adult does not push anymore the push-button. The spring is enough rigid that a baby can not push the push-button.

Such push-button can be installed on each slider 114, or on only a first slider 114, in this case a cable linked to the push-button can be arranged in such a way that the second slider 114 is unlocked thanks to the cable when the push-button is activated, and locked thanks to the cable when the push-button is deactivated.

A cable can be linked to the two sliders 114 in order that the heights of the two sliders 114 are the same and avoid that the bassinet 102 is tilted. In another possible embodiment, the synchronization of the height of the two sliders is obtained by the rigidity of the baby bassinet metal frame 106.

The bassinet 102 is similar to the bassinet of the prior art and comprises a rigid structure 104 on which is fixed a fabric cover (not represented). The rigid structure 104 is foldable and comprises a frame 106 forming the upper horizontal part of the bassinet 102 and two arches 108 extending vertically under the frame 106 and fixed to the same through pivot link 110.

Preferably, the equipped bassinet 100 has to be folded to take less room when it is stored. At this end, each slider 114 is fixed to an arch 108. Indeed, thanks to this arrangement, each rail 112 will be parallel to the plane of the frame 106 when the equipped bassinet is folded. The folded equipped baby bassinet is then practically flat, and can preferably be stored in the same location as the prior art bassinet.

Preferably, the fixation of a slider 114 to an arch 108 is realized at the upper extremity of said arch 108 and at the part of the arch 108 which is closed to the rail 112.

To limit the angular displacement of the bassinet 102 around an axis parallel to the longitudinal axis of the bassinet 102, an abutment element 118 is set between the lower extremity of each arch 108 and the rail 112.

The abutment element 118 can be fixed to the lower extremity of the arch 108 and comes into contact with the rail 112. The abutment element 118 moves at the same time as the bassinet 102. In another possible embodiment, the abutment 18 can come in contact directly with the wall 10, nearby the rail 112 or under the rail 112.

The abutment element 118 can be replaced by a second slider connected to the lower extremity of the arch 108 and which moves along the rail 112 in the same manner than the slider 114.

It is possible to implement other embodiments of the invention, allowing the fixation of the bassinet to the wall and the height adjustment of its position along the wall.

For example, the adjusting system of the equipped baby bassinet can comprise two rails, each rail extending along the vertical part of one arch of the bassinet and fixed to this arch. For each rail, a slider mobile in translation along said rail is intended to be detachably fixed to the wall. A locking device intended to lock the position of at least one of the sliders in the corresponding rail can be of the same type as in the previously described embodiment.

Many others embodiments of adjusting systems which ensure the fixation of the bassinet to the wall, and an height adjustment of the position of the bassinet along the wall can be imagined by a skilled person, for example a system comprising an unique rail extending vertically or another system allowing the vertical translation movement of the bassinet relative to the wall.

## Claims

1. Equipped baby bassinet (100) intended to be fixed to a wall (10) and comprising:
- a bassinet (102), and
- an adjusting system (150) which ensures the fixation of the bassinet (102) to the wall (10), and an height adjustment of the position of the bassinet (102) along the wall (10).

2. Equipped baby bassinet (100) according to claim 1, **characterized in that** the adjusting system (150) comprises:
- two parallel rails (112), each rail (112) being intended to be detachably fixed vertically to the wall (10),
- for each rail (112), a slider (114) mobile in translation along said rail (112), the bassinet (102) being fixed to each slider (114), and
- for at least one slider (114), a locking device (116) intended to lock said slider (114) in at least two positions on the rail (112).

3. Equipped baby bassinet (100) according to claim 2, **characterized in that**:
- the bassinet (102) comprises an horizontal frame (106) and two arches (108) extending vertically under the frame (106) and fixed to the same through pivot link (110), and **in that**
- each slider (114) is fixed to an arch (108).

4. Equipped baby bassinet (100) according to claim 3, **characterized in that** the fixation of a slider (114) to an arch (108) is realized at the upper extremity of said arch (108).

5. Equipped baby bassinet (100) according to claim 4, **characterized in that** an abutment element (118) is set between the lower extremity of each arch (108) and the rail (112) or the wall (10).

6. Equipped baby bassinet (100) according to claim 5, **characterized in that** the abutment element (118) is fixed to the lower extremity of the arch (108).

7. Equipped baby bassinet according to claim 1, **characterized in that** the adjusting system comprises:
- two parallel rails extending vertically, the bassinet being fixed to each rail,
- for each rail, a slider mobile in translation along said rail, each slider being intended to be detachably fixed to the wall, and
- for at least one slider, a locking device intended to lock said slider in at least two positions on the rail.

8. Equipped baby bassinet according to claim 7, **characterized in that**:
- the bassinet comprises an horizontal frame and two arches extending vertically under the frame and fixed to the same through pivot link, and **in that**
- each rail is fixed to an arch.
